# EUROPÄISCHE PATENTSCHRIFT

(11) **EP 1 284 883 B1**
(45) Veröffentlichungstag und Bekanntmachung des Hinweises auf die Patenterteilung: **07.07.2004**
(21) Anmeldenummer: 01940196.7
(22) Anmeldetag: 27.04.2001
(51) Int. Cl.: B60K 37/02, B60Q 3/04, G01D 11/28

(54) **BELEUCHTUNGS- UND ANZEIGEVORRICHTUNG**
ILLUMINATION AND DISPLAY DEVICE
DISPOSITIF D'ECLAIRAGE ET D'AFFICHAGE

(30) Priorität: 02.05.2000 DE 10021099
(43) Veröffentlichungstag der Anmeldung: 26.02.2003
(73) Patentinhaber: ROBERT BOSCH GMBH, 70442 Stuttgart (DE)
(72) Erfinder: SCHACH, Harald, 71287 Flacht (DE); EWALD, Georg, 71287 Weissach (DE)
(86) Internationale Anmeldenummer: PCT/DE2001/001591
(87) Internationale Veröffentlichungsnummer: WO 2001/083255

(56) Entgegenhaltungen:
- EP-A- 1 055 916
- DE-A- 4 401 231
- DE-A- 19 705 452
- US-A- 5 703 612
- US-A- 6 025 820

## Beschreibung

### Stand der Technik

Die Erfindung geht aus von einer Beleuchtungsvorrichtung für ein Anzeigeinstrument nach der Gattung des Hauptanspruchs. Es sind schon Beleuchtungsvorrichtungen für Anzeigeinstrumente mit zwei verschiedenen Skalenbeschriftungen bekannt, bei denen sowohl die Skalenbeschriftungen als auch eine Zeigerskala von einer Lichtquelle beleuchtet werden (siehe, zum Beispiel, die US-A-6 025 820, welche die Merkmale des Oberbegriffs des Anspruchs 1 offenbart). Sollen einzelne Segmente der Zeigerskala abgedunkelt werden, so ist es bekannt, diese Abdunklung mittels einer schaltbaren Flüssigkristallzelle durchzuführen. Die Flüssigkristallzelle ist jedoch aufwendig herzustellen und schwierig zu montieren, zumal sie im allgemeinen aus Glas gefertigt wird. Ferner ist es bekannt, für die Beleuchtung der Zeigerskala jeweils zusätzliche Lichtquellen anzuordnen.

### Vorteile der Erfindung

Die erfindungsgemäße Beleuchtungsvorrichtung mit den Merkmalen des Hauptanspruchs hat dem gegenüber den Vorteil, daß durch eine erste Lichtquelle sowohl eine erste Skalenbeschriftung als auch mittels Lichtführung durch einen Lichtleiter eine zweite Skalenbeschriftung getrennt von der Zeigerskala beleuchtet werden kann. Indem der Lichtweg von der ersten Lichtquelle zu den Skalenbeschriftungen durch Lichtschächte von einer Beleuchtung der Zeigerskala getrennt wird, ist hiermit eine ungestörte Beleuchtung der Zeigerskala bzw. von Teilen der Zeigerskala möglich, so daß Teile der Zeigerskala auch geschaltet oder mit einer anderen Farbe als der der Skalenbeschriftung beleuchtet werden können. Auf eine zweite Lichtquelle für die zweite Skalenbeschriftung kann daher verzichtet werden.

Durch die in den Unteransprüchen aufgeführten Maßnahmen sind vorteilhafte Weiterbildungen und Verbesserungen der im Hauptanspruch angegebenen Beleuchtungsvorrichtung möglich. Besonders vorteilhaft ist, sowohl die Lichtquellen als auch den Lichtschacht an einer Leiterplatte anzuordnen, da hierdurch die Lichtquellen auf einfache Weise ohne zusätzliche Drahtverbindungen mit einer Betriebsspannung versorgt werden können.

Ferner ist vorteilhaft, die Zeigerskala durch eine Vielzahl von Lichtquellen zu beleuchten, so daß einzelne Segmente der Zeigerskala getrennt beleuchtet werden können. Hierzu sind die einzelnen Lichtquellen vorzugsweise elektrisch getrennt ansteuerbar.

Weiterhin ist vorteilhaft, den Lichtschacht aus einem reflektierenden Material auszubilden, um eine möglichst homogene und effiziente Beleuchtung der Zeigerskala zu gewährleisten. Hierbei ist insbesondere vorteilhaft, die einzelnen Lichtschächte in einem Bauteil zu integrieren, das vorzugsweise in einem Kunststoff-Spritzgussverfahren hergestellt wird. Dieses Bauteil ist einfach zu montieren und kann gleichzeitig für eine Fixierung des Lichtleiters verwendet werden.

Weiterhin ist vorteilhaft, die Beleuchtungsvorrichtung in einem Anzeigeinstrument zu verwenden und für eine bessere Homogenisierung zwischen der Beleuchtungsvorrichtung und einem Zifferblatt eine Streuscheibe anzuordnen, um eine möglichst homogene Helligkeitsverteilung insbesondere des Lichts der ersten Lichtquelle zu erreichen.

Weiterhin ist vorteilhaft, mit der erfindungsgemäßen Beleuchtungsvorrichtung bzw. der erfindungsgemäßen Anzeigevorrichtung eine Tempomatanzeige in einem Fahrzeug auszuführen, bei der neben einer aktuellen Fahrzeuggeschwindigkeit, die mittels eines Zeigers angezeigt wird, eine durch einen Fahrer vorgegebene Sollgeschwindigkeit mittels einer Anzeige über eine nur teilweise Beleuchtung der Zeigerskala bzw. eine farbliche Veränderung der Zeigerskala angezeigt wird. Hierdurch wird ein Benutzer mit einem Blick auf das Anzeigeinstrument sowohl über die aktuelle Fahrzeuggeschwindigkeit als auch über eine eingestellte Sollgeschwindigkeit informiert.

### Zeichnung

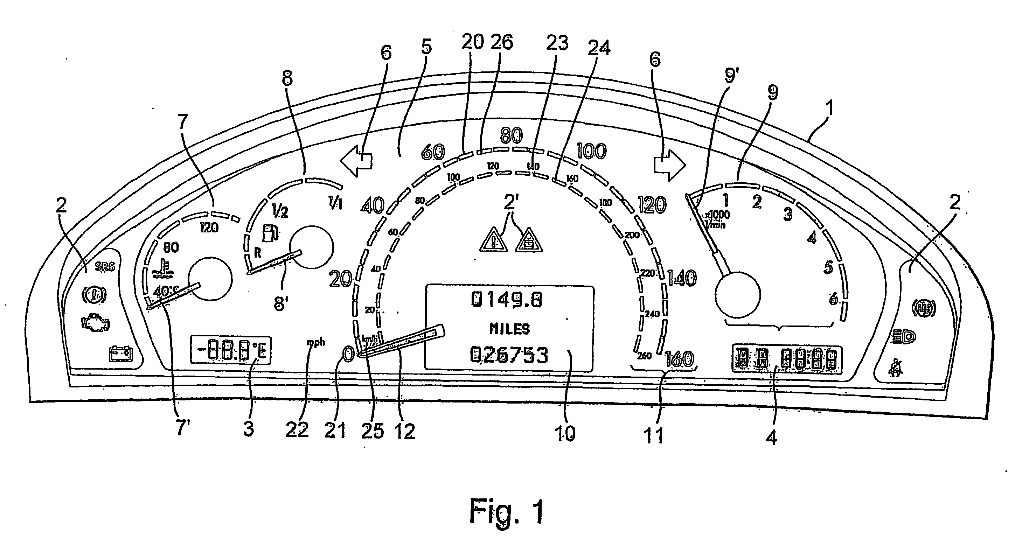

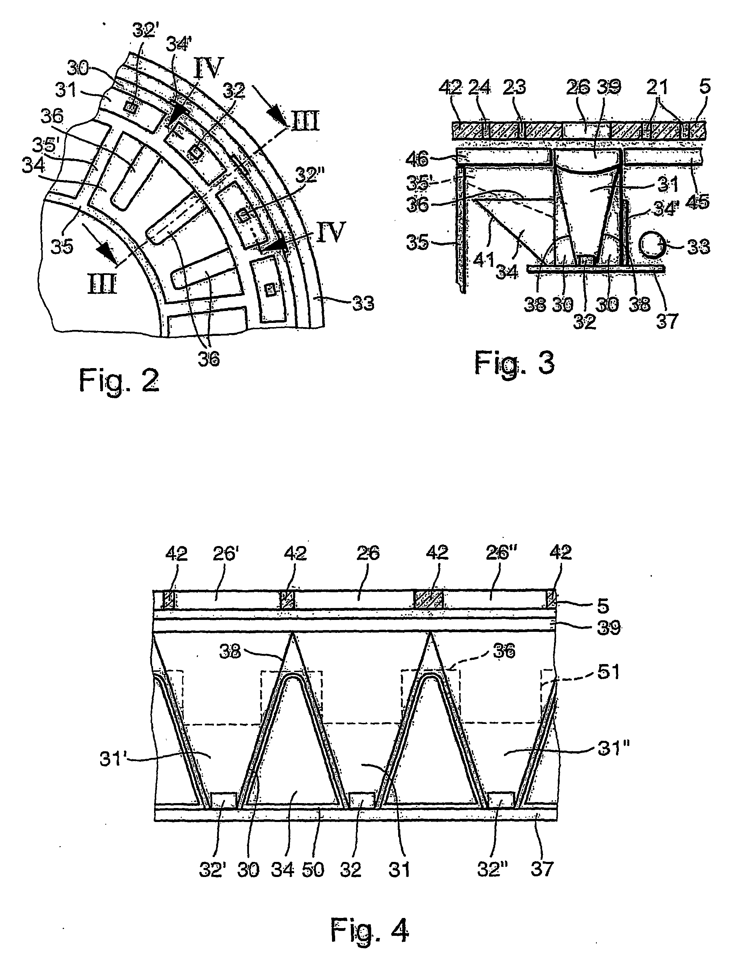

Figur 1 zeigt ein Kombiinstrument mit einem erfindungsgemäßen Anzeigeinstrument, Figur 2 eine erste Ansicht einer erfindungsgemäß ausgeführten Beleuchtungsvorrichtung in einem Anzeigeinstrument in einer Aufsicht, Figur 3 die erfindungsgemäße Beleuchtungsvorrichtung der Figur 2 in einem Schnitt entlang der Linie III, Figur 4 die erfindungsgemäße Beleuchtungsvorrichtung gemäß der Figur 2 in einem Längsschnitt gemäß der Linie IV.

### Beschreibung des Ausführungsbeispiels

Die erfindungsgemäße Beleuchtungsvorrichtung kann in verschiedenen Anzeigeinstrumenten mit mindestens einer Zeigerskala und zwei Beschriftungen dieser Zeigerskala, z.B. mit unterschiedlichen physikalischen Einheiten oder mit verschiedenen, direkt ermittelbaren Größen, verwendet werden, z.B. allgemein in Meßgeräten. Die vorliegende Erfindung wird anhand einer Verwendung für ein Anzeigeinstrument in einem Kraftfahrzeug erläutert. In der Figur 1 ist ein Kombiinstrument 1 mit einer Vielzahl von Anzeigen dargestellt, daß in einem Kraftfahrzeug vor einem Fahrer angeordnet ist und das den Fahrer über wichtige Fahrzeugparameter informiert. In dem Kombiinstrument 1 sind seitlich rechts und links Warnfelder 2 angeordnet, die einzeln beleuchtbar sind und die zur Warnung eines Fahrers z.B. bei einem Fahrzeugdefekt dienen. Ferner sind in dem Kombiinstrument 1 eine Temperaturanzeige 3 und eine Uhrzeitanzeige 4 angeordnet, auf der die Außentemperatur bzw. die Uhrzeit mittels einer Flüssigkristallanzeige dargestellt wird. An einem Zifferblatt 5 sind Anzeigen für eine Fahrtrichtungsanzeige 6 vorgesehen, die vorzugsweise über Leuchtdioden beleuchtet werden. Ferner sind an dem Zifferblatt 5 eine Kühlwassertemperaturanzeige 7, eine Tankstandsanzeige 8 und eine Motordrehzahlanzeige 9 angeordnet, bei denen ein Zeiger 7', 8' bzw.9' einer Anzeige der jeweiligen Messgröße vor einer Zeigerskala dient. Mittig in dem Zifferblatt 5 ist eine Kilometer- bzw. Meilenanzeige 10 angeordnet, neben der weitere Warnfelder 2' angeordnet sind. Die Kilometer- bzw. die Meilenanzeige 10 wird halbkreisförmig von einer Geschwindigkeitsanzeige 11 umgeben, bei der eine aktuelle Fahrzeuggeschwindigkeit durch eine Position eines Zeigers 12 über einer Zeigerskala 20 dargestellt wird. Die Zeigerskala 20 weist eine erste Skalenbeschriftung 21 mit Werten von "0" bis "160" in Abständen von jeweils zwanzig auf, die durch eine Einheitenbezeichnung 22 als "mph", miles per hour, gekennzeichnet sind. Ferner weist die Geschwindigkeitsanzeige 11 eine zweite Skalenbeschriftung 23 mit einer Hilfsskala 24 auf. Bei der zweiten Skalenbeschriftung 23 läuft der Wert in Zwanziger-Schritten von "20" bis "260" und ist durch eine zweite Einheitenbezeichnung 25 als "km/h" Kilometer pro Stunde gekennzeichnet. Die Zeigerskala 20 dient der Anzeige einer Sollgeschwindigkeit. Die Zeigerskala 20 besteht aus einzelnen Segmenten 26, die jeweils einzeln beleuchtbar sind. Eine erfindungsgemäße Beleuchtungsvorrichtung erstreckt sich hinter der Geschwindigkeitsanzeige 11, so daß die erste Skalenbeschriftung 21 und die zweite Skalenbeschriftung 23 mit der Hilfsskala 24 gemeinsam beleuchtbar sind, während die Segmente 26 der Zeigerskala 20 hiervon getrennt und segmentweise einzeln beleuchtbar sind. Während der Zeiger 12 eine aktuelle Fahrzeuggeschwindigkeit anzeigt, wird mittels der Beleuchtung der Segmente 26 der Zeigerskala 20 eine Sollgeschwindigkeit des Fahrzeugs (eine sogenannte Tempomatgeschwindigkeit) angezeigt. In einem ersten Ausführungsbeispiel werden dabei die Skalensegmente 26 bis zu der Wunschgeschwindigkeit, z.B. 80 mph, erhellt, während alle Skalensegmente oberhalb dieser Wunschgeschwindigkeit verdunkelt bleiben oder nur sehr schwach beleuchtet werden. In weiteren Ausführungsbeispielen ist durch eine farblich veränderte Beleuchtung, z.B. in grün bis zur einer Sollgeschwindigkeit und in rot oberhalb dieser Sollgeschwindigkeit, oder auch durch die Beleuchtung bzw: die Verdunklung nur eines Skalensegmentes an der Stelle der jeweiligen Sollgeschwindigkeit eine Anzeige der Sollgeschwindigkeit mit der Zeigerskala 20 möglich. Das Zifferblatt 5 ist bis auf Durchbrechungen lichtundurchlässig ausgeführt, wobei die Durchbrechungen, Zeigerskalen und Skalenbeschriftungen für die Zeigeranzeigen 7, 8, 9 sowie für die Geschwindigkeitsanzeige 11 bilden. Eine Recheneinheit zur Steuerung der Tempomatfunktion ist ebenso wie eine Bedieneinheit für die Eingabe der Wunschgeschwindigkeit durch einen Fahrer in der Figur 1 nicht dargestellt. In einem weiteren, in der Figur 1 nicht gezeigten Ausführungsbeispiel wird auf eine zweite Skalenbeschriftung 23 verzichtet und es wird statt dessen nur die Hilfsskala 24 an der der ersten Skalenbeschriftung 21 abweisenden Seite der Zeigerskala angeordnet, um eine Orientierung über die Ausmaße der gesamten Zeigerskala zu geben. Ebenso kann auch ausgehend von dem zu der Figur 1 beschriebenen Ausführungsbeispiel auf die Anordnung der Hilfsskala 24 verzichtet werden.

In der Figur 2 ist eine Aufsicht von der Position des zifferblattes auf eine dahinter liegende, erfindungsgemäße Beleuchtungsvorrichtung in einem Bereich der Geschwindigkeitsanzeige 11 dargestellt. In einem Bereich unterhalb der Zeigerskala 20 sind in einem Träger 30 gleichartige Lichtschächte 31, 31'und 31" eingebracht, an deren Boden jeweils eine gleichartige Lichtquelle 32, 32', 32" angeordnet ist. Die Lichtschächte 31, 31', 31" entsprechen dabei in ihrer Größe ungefähr jeweils den Segmenten 26, 26', 26", so daß durch jeden Lichtschacht 31, 31', 31" mit der dazugehörigen jeweiligen Lichtquelle 32, 32', 32" ein Segment 26 der Zeigerskala 20 gemäß der Figur 1 ausgeleuchtet wird. Der Träger 30 folgt dabei einer Kreisform der Geschwindigkeitsanzeige 11. Außerhalb des durch den Träger 30 beschriebenen Kreises ist eine erste Lichtquelle 33 angeordnet. Die erste Lichtquelle 33, die vorzugsweise als eine Kaltkathodenfluoreszenzröhre ausgeführt ist, verläuft unterhalb der Skalenbeschriftung 21 gemäß der Ausführung der Figur 1. An der Innenseite des durch den Träger 30 beschriebenen Kreises schließt ein Lichtleiter 34 an, über den sich Haltestrukturen 35, 35' erstrecken, die an den Träger 30 angeformt sind und die eine Erweiterung des Trägers 30 darstellen. Der Lichtleiter 34 weist Auskoppelflächen 36 auf, die der Auskopplung des Lichtes dienen, das von der ersten Lichtquelle 33 in den Lichtleiter 34 eingekoppelt und in Richtung der zweiten Skalenbeschriftung 23 bzw. der Hilfsskala 24 ausgekoppelt wird. Die Auskoppelflächen 36 verlaufen dabei in einem bevorzugten Ausführungsbeispiel ungefähr parallel zu der Oberfläche des Zifferblattes 5. In einem weiteren Ausführungsbeispiel sind die Auskoppelflächen 36 mit einem Streuaufdruck bzw. mit Mikroprismen versehen, um eine effiziente Auskopplung an den Auskoppelflächen 36 zu gewährleisten. Der Lichtleiter 34 ist aus einem transparenten Kunststoffmaterial, vorzugsweise Polycarbonat, ausgeführt. Ferner kann der Lichtleiter auch aus einem lichtstreuenden Material ausgeführt sein. Der Träger 31 ist vorzugsweise aus einem reflektierenden Kunststoffmaterial, vorzugsweise aus mit Titandioxyd eingefärbtem Polycarbonat ausgeführt, um hierbei einerseits das in den Lichtschacht 31 von der zweiten-Lichtquelle 32 abgestrahlte Licht und andererseits das von dem Lichtleiter 34 ausgekoppelte Licht in Richtung des Zifferblattes 5 umzulenken. Der Lichtleiter 34 ragt in einem Bereich 34' auf der der ersten Lichtquelle 33 zugewandten Seite des Trägers 30 über die Seite des Trägers 30 hinaus, wobei dem Bereich 34' auf der dem Bereich 34'gegenüberliegenden Seite des Trägers 30 eine Auskoppelfläche 36 gegenüberliegt.

In der Figur 3 ist ein Längsschnitt durch die in der Figur 2 dargestellte Beleuchtungsvorrichtung entlang der Linie III in der Figur 2 dargestellt. Die zweite Lichtquelle 32 ist an einer Leiterplatte 37 angeordnet, über die die erste Lichtquelle 33 mit einer Betriebsspannung versorgt wird. Hierzu auf der Leiterplatte 37 angeordnete Leiterbahnen sind in der Figur 3 nicht dargestellt. Die Lichtquelle 32 strahlt Licht in den Lichtschacht 31, der durch reflektierende Wände 38 des Trägers 30 begrenzt wird. In einem bevorzugten Ausführungsbeispiel ist auf der der Lichtquelle 32 abgewandten Seite des Lichtschachtes 31 eine Linse 39 angeordnet, die das von der zweiten Lichtquelle 32 ausgestrahlte Licht in Richtung eines Segments 26 der Zeigerskala 20 in dem Zifferblatt 5 bündelt, wobei das Zifferblatt 5 auf der Linse 39, auf einer ersten Streuscheibe 45 und auf einer zweiten Streuscheibe 46 aufliegt. Die erste Streuscheibe 45 homogenisiert das von der ersten Lichtquelle 33 direkt in Richtung des Zifferblatts 5 abgestrahlte Licht. Die zweite Streuscheibe 46 homogenisiert das von dem Lichtleiter 34 bzw. den Auskoppelflächen 36 in Richtung des Zifferblattes 5 abgestrahlte Licht. Sowohl die erste Streuscheibe 45 als auch die zweite Streuscheibe 46 liegen in einem bevorzugten Ausführungsbeispiel auf dem Träger 30 auf. In der Figur 3 ist gestrichelt eine Haltestruktur 35' dargestellt, das den Lichtleiter 34 gegen die Leiterplatte 37 hält. In dem Zifferblatt 5 sind neben dem Segment 26 lichtundurchlässige Bereiche 42 erkennbar, die durch Öffnungen für die erste Skalenbeschriftung 21 sowie für die zweite Skalenbeschriftung 23 als auch für die Hilfsskala 24 unterbrochen werden. Das von der ersten Lichtquelle 33 abgestrahlte Licht wird durch die erste Streuscheibe 45 homogenisiert und hinterleuchtet dabei die erste Skalenbeschriftung 21 in dem Zifferblatt 5. Ferner strahlt Licht von der ersten Lichtquelle 33 durch den Bereich 34' des Lichtleiters in den Lichtleiter 34 hinein und wird durch die Auskoppelflächen 36 in Richtung der zweiten Streuscheibe 46 bzw. der zweiten Skalenbeschriftung 23 und der Hilfsskala 24 umgelenkt. In einem bevorzugten Ausführungsbeispiel weist der Lichtleiter 34 eine Umlenkfläche 41 auf, die auf einer den Auskoppelflächen 36 abgewandten Seite des Lichtleiters 34 angeordnet ist und die das in den Lichtleiter 34 eingestrahlte Licht in Totalreflexion zu der zweiten Skalenbeschriftung 23 umlenkt.

In der Figur 4 ist ein Längsschnitt durch die erfindungsgemäße Anzeigevorrichtung gemäß der Linie IV in der Figur 2 dargestellt. In der Figur 4 ist einer zweiten Lichtquelle 32 ein Segment 26, einer zweiten Lichtquelle 32' ein Segment 26' und einer zweiten Lichtquelle 32" ein Segment 26" zugeordnet. Die Beleuchtung der einzelnen Segmente 26, 26', 26" sind dabei gleichartig ausgeführt. Der Lichtschacht 31 verläuft trichterförmig ausgehend von der Leiterplatte 37, bzw. der zweiten Lichtquelle 32 in Richtung des Zifferblattes 5 und öffnet sich hierbei. Zwischen einem Lichtschacht 31 zu der zweiten Lichtquelle 32 und einem Lichtschacht 31' zu der zweiten Lichtquelle 32' ist eine Öffnung 50 für den Lichtleiter 34 in den Träger 30 eingebracht, durch den das Licht von der in der Figur 4 nicht gezeigten ersten Lichtquelle 33 in Richtung der zweiten Skalenbeschriftung 23 bzw. der Hilfsskala 24 eingekoppelt wird. Der Lichtleiter 34 ist durch die Wände des Lichtschachts 31, die nicht transparent sind, optisch von der zweiten Lichtquelle 32 getrennt. Durch eine gestrichelte Linie 51 ist der Verlauf des Lichtleiters 34 auf der dem Träger 30 gemäß der Ansicht in der Figur 4 abgewandten Seite dargestellt. Sobald der Lichtleiter 34 den Träger 30 durchquert hat, weitet sich der Lichtleiter 34 in einer dem Zifferblatt 5 zuweisenden Seite auf und bildet die Auskoppelflächen 36 aus. Bei dem hier dargestellten Ausführungsbeispiel werden für die zweiten Lichtquellen 32 Leuchtdioden verwendet. Ferner ist es auch möglich, andere Lichtquellen, z.B. Glühlampen, oder Glimmlampen zu verwenden. Indem die einzelnen Segmente 26, 26', 26" der Zeigerskala 20 durch lichtundurchlässige Bereiche 42 des Zifferblattes 5 getrennt werden, ist eine jeweils separate Beleuchtung des Skalensegmentes durch die dazugehörige zweite Lichtquelle 32, 32', 32" möglich.

## Patentansprüche

1. Beleuchtungsvorrichtung für ein Anzeigeinstrument (1) mit einem Zifferblatt (5), wobei auf dem Zifferblatt (5) eine Zeigerskala (20) angeordnet ist, wobei eine erste Skalenbeschriftung (21) an einer ersten Seite der Zeigerskala (20) auf dem Zifferblatt (5) angeordnet ist und wobei eine zweite Skalenbeschriftung (23) und/oder eine Hilfsskala (24) an einer zweiten Seite der Zeigerskala (20) auf dem Zifferblatt (5) angeordnet ist, wobei die erste Skalenbeschriftung (21) durch eine erste Lichtquelle (33) beleuchtet wird, **dadurch gekennzeichnet, daß** Licht der ersten Lichtquelle (33) in einen Lichtleiter (34) eingekoppelt wird und aus dem Lichtleiter (34) zu der zweiten Skalenbeschriftung (23) und/oder der Hilfsskala (24) umgelenkt wird, daß die Zeigerskala (20) durch mindestens eine zweite Lichtquelle (32, 32', 32") beleuchtet wird und zwischen der mindestens einen zweiten Lichtquelle (32, 32', 32") und der Zeigerskala (20) ein Lichtschacht (31) angeordnet ist und daß der Lichtweg von der zweiten Lichtquelle (32) zu der Zeigerskala (20) von dem Lichtleiter (34) durch den Lichtschacht (31) getrennt ist.

2. Beleuchtungsvorrichtung nach Anspruch 1, dass die mindestens ein zweite Lichtquelle (32, 32', 32") und der Lichtschacht (31) an einer Leiterplatte (37) angeordnet sind.

3. Beleuchtungsvorrichtung nach einem der vorhergehenden Ansprüche, **dadurch gekennzeichnet, dass** die Zeigerskala (20) durch eine Vielzahl von zweiten Lichtquellen (32, 32', 32") beleuchtbar ist, dass diese Lichtquellen (32, 32', 32") jeweils in einem Lichtschacht (31, 31', 31") angeordnet sind und dass der Lichtleiter (34) zwischen mindestens zwei Lichtschächten (31, 31') von der ersten Lichtquelle (33) zu der zweiten Skalenbeschriftung (23) und/oder der Hilfsskala (24) verläuft.

4. Beleuchtungsvorrichtung nach Anspruch 3, dass die Zeigerskala (20) eine Vielzahl von Skalensegmenten (26, 26, 26") aufweist, dass einem Skalensegment (26, 26', 26") mindestens eine zweite Lichtquelle (32, 32', 32") zugeordnet ist und dass die zweiten Lichtquellen (32, 32', 32"), vorzugsweise Leuchtdioden, einzeln elektrisch ansteuerbar und in ihrer Helligkeit oder Farbe änderbar sind.

5. Beleuchtungsvorrichtung nach einem der vorhergehenden Ansprüche, **dadurch gekennzeichnet, daß** der Lichtschacht oder die Lichtschächte (31, 31', 31") aus einem reflektierenden Material gefertigt ist sind, vorzugsweise aus einem weißen Kunststoffmaterial.

6. Beleuchtungsvorrichtung nach einem der Ansprüche 3-5, **dadurch gekennzeichnet, daß** eine Vielzahl von Lichtschächten (31, 31', 31") in einem Träger (30) miteinander verbunden sind und dass der Lichtleiter (34) von dem Träger (30) gegen die Leiterplatte (37) gehalten ist.

7. Anzeigeinstrument mit einer Beleuchtungsvorrichtung nach einem der vorhergehenden Ansprüche.

8. Anzeigeinstrument nach Anspruch 7, **dadurch gekennzeichnet, dass** zwischen dem Zifferblatt und der ersten Lichtquelle eine Streuscheibe (46) angeordnet ist.

9. Tempomatanzeige in einem Fahrzeug mit einer Recheneinheit und einem Anzeigeinstrument nach einem der Ansprüche 7-8, **dadurch gekennzeichnet, daß** durch die Tempomatanzeige eine tatsächliche Fahrzeuggeschwindigkeit vorzugsweise mittels eines Zeigers anzeigbar ist und dass durch die Tempomatanzeige eine gewünschte Geschwindigkeit mittels einer Beleuchtung von Segmenten einer Zeigerskala des Anzeigeinstruments anzeigbar ist.

## Claims

1. Illuminating device for a display instrument (1) having a dial (5), a pointer scale (20) being arranged on the dial (5), a first scale inscription (21) being arranged on a first side of the pointer scale (20) on the dial (5), and a second scale inscription (23) and/or an auxiliary scale (24) being arranged on a second side of the pointer scale (20) on the dial (5), the first scale inscription (21) being illuminated by a first light source (33), **characterized in that** light of the first light source (33) is coupled into a light guide (34) and is deflected from the light guide (34) to the second scale inscription (23) and/or the auxiliary scale (24), **in that** the pointer scale (20) is illuminated by at least one second light source (32, 32', 32") and a light shaft (31) is arranged between the at least one second light source (32, 32', 32") and the pointer scale (20) and **in that** the light path from the second light source (32) to the pointer scale (20) is separated from the light guide (34) by the light shaft (31).

2. Illuminating device according to Claim 1, **characterized in that** the at least one second light source (32, 32', 32") and the light shaft (31) are arranged on a printed circuit board (37).

3. Illuminating device according to one of the preceding claims, **characterized in that** the pointer scale (20) can be illuminated by a multiplicity of second light sources (32, 32', 32"), **in that** these light sources (32, 32', 32") are each arranged in a light shaft (31, 31', 31"), **in that** the light guide (34) runs between at least two light shafts (31, 31') from the first light source (33) to the second scale inscription (23) and/or the auxiliary scale (24).

4. Illuminating device according to Claim 3, **characterized in that** the pointer scale (20) has a multiplicity of scale segments (26, 26', 26"), **in that** a scale segment (26, 26', 26") is assigned at least one second light source (32, 32', 32"), and **in that** the second light sources (32, 32', 32"), preferably light-emitting diodes, can be individually electrically driven and can have their brightness or colour changed.

5. Illuminating device according to one of the preceding claims, **characterized in that** the light shaft or the light shafts (31, 31', 31") is/are fabricated from a reflecting material, preferably from a white plastic material.

6. Illuminating device according to one of Claims 3-5, **characterized in that** a multiplicity of light shafts (31, 31', 31") are interconnected in a carrier (30), and **in that** the light guide (34) is held by the carrier (30) against the printed circuit board (37).

7. Display instrument having an illuminating device according to one of the preceding claims.

8. Display instrument according to Claim 7, **characterized in that** a diffusing screen (46) is arranged between the dial and the first light source.

9. Cruise controller display in a vehicle having a central processor and a display instrument according to one of Claim 7-8, **characterized in that** the cruise controller display can display an actual vehicle speed, preferably by means of a pointer, and **in that** the cruise controller display can display a desired speed by means of illuminating segments of a pointer scale of the display instrument.

## Revendications

1. Dispositif d'éclairage pour un instrument indicateur (1) comprenant un cadran (5), avec une échelle indicatrice (20) disposée sur le cadran (5), une première inscription d'échelle (21) disposée sur le cadran (5) le long d'un premier côté de l'échelle indicatrice (20), et une deuxième inscription d'échelle (23) et/ou une échelle auxiliaire (24) disposée(s) sur le cadran (5) le long d'un deuxième côté de l'échelle indicatrice (20), la première inscription d'échelle (21) étant éclairée par une première source lumineuse (33),
**caractérisé en ce que**
la lumière de la première source lumineuse (33) est injectée dans un guide de lumière (34) et est renvoyée du guide de lumière (34) vers la deuxième inscription d'échelle (23) et/ou vers l'échelle auxiliaire (24), l'échelle indicatrice (20) est éclairée par au moins une deuxième source lumineuse (32, 32', 32") et un puits de lumière (31) est disposé entre l'au moins une deuxième source lumineuse (32, 32', 32") et l'échelle indicatrice (20) et **en ce que** le trajet optique menant de la deuxième source lumineuse (32) à l'échelle indicatrice (20) est séparé du guide de lumière (34) par le puits de lumière (31).

2. Dispositif d'éclairage selon la revendication 1,
**caractérisé en ce que**
l'au moins une deuxième source lumineuse (32, 32', 32") et le puits de lumière (31) sont disposées sur un circuit imprimé (37).

3. Dispositif d'éclairage selon une des revendications précédentes,
**caractérisé en ce que**
l'échelle indicatrice (20) peut être éclairée par plusieurs deuxièmes sources lumineuses (32, 32', 32"), ces sources lumineuses (32, 32', 32") sont disposées chacune dans un puits de lumière (31, 31', 31"), et le guide de lumière (34) s'étend de la première source lumineuse (33) à la deuxième inscription d'échelle (23) et/ou à l'échelle auxiliaire (24) entre au moins deux puits de lumière (31, 31').

4. Dispositif d'éclairage selon la revendication 3,
**caractérisé en ce que**
l'échelle indicatrice (20) comprend plusieurs segments d'échelle (26, 26', 26"), à un segment d'échelle (26, 26', 26") est associée au moins une deuxième source lumineuse (32, 32', 32") et les deuxièmes sources lumineuses (32, 32', 32"), qui sont de préférence des diodes électroluminescentes peuvent être commandées électriquement individuellement et peuvent être modifiées en luminosité ou couleur.

5. Dispositif d'éclairage selon une des revendications précédentes,
**caractérisé en ce que**
le (ou les) puits de lumière (31, 31', 31") est (sont) fabriquée(s) en une matière réfléchissante, de préférence en une matière plastique blanche.

6. Dispositif d'éclairage selon une des revendications 3 à 5,
**caractérisé en ce que**
plusieurs puits de lumière (31, 31', 31") sont réunis entre eux dans un support (30) et le guide de lumière (34) est maintenu contre le circuit imprimé (37) par le support (30).

7. Instrument indicateur équipé d'un dispositif d'éclairage selon l'une quelconque des revendications précédentes.

8. Instrument indicateur selon la revendication 7,
**caractérisé en ce qu'**
une plaque diffusante (46) est interposée entre le cadran et la première source lumineuse.

9. Indicateur Tempomate prévu dans un véhicule, comprenant une unité de calcul et un instrument indicateur selon l'une des revendications 7 ou 8,
**caractérisé en ce qu'**
une vitesse réelle du véhicule peut être indiquée par l'indicateur Tempomat, de préférence au moyen d'une aiguille et l'indicateur Tempomate peut indiquer une vitesse souhaitée au moyen d'un éclairage de segments d'une échelle indicatrice de l'instrument indicateur.
